(19) **Europäisches Patentamt**

**European Patent Office**

**Office européen des brevets**

(11) **EP 1 184 336 A1**

(12) **EUROPEAN PATENT APPLICATION**
published in accordance with Art. 158(3) EPC

(43) Date of publication:
06.03.2002 Bulletin 2002/10

(51) Int Cl.7: **C01B 3/38**, C10K 3/04,
H01M 8/06

(21) Application number: 00917307.1

(22) Date of filing: 13.04.2000

(86) International application number:
PCT/JP00/02419

(87) International publication number:
WO 00/61491 (19.10.2000 Gazette 2000/42)

(84) Designated Contracting States:
AT BE CH CY DE DK ES FI FR GB GR IE IT LI LU MC NL PT SE

(30) Priority: 14.04.1999 JP 10623099

(71) Applicant: **TOYOTA JIDOSHA KABUSHIKI KAISHA**
**Aichi-ken 471-8571 (JP)**

(72) Inventors:
• **MURATA, Kiyohito,**
**Toyota Jidosha Kabushiki Kaisha**
**Toyota-shi, Aichi 471-8571 (JP)**
• **NARUOKA, Takao,**
**Toyota Jidosha Kabushiki Kaisha**
**Toyota-shi, Aichi 471-8571 (JP)**

• **SUZUKI, Toshitake,**
**Toyota Jidosha Kabushiki Kaisha**
**Toyota-shi, Aichi 471-8571 (JP)**
• **INOUE, Masahiro,**
**Toyota Jidosha Kabushiki Kaisha**
**Toyota-shi, Aichi 471-8571 (JP)**
• **AOYAMA, Satoshi,**
**Toyota Jidosha Kabushiki Kaisha**
**Toyota-shi, Aichi 471-8571 (JP)**

(74) Representative: **Winter, Brandl & Partner**
**Patent- und Rechtsanwaltskanzlei**
**Alois-Steinecker-Strasse 22**
**85354 Freising (DE)**

(54) **APPARATUS FOR SELECTIVE OXIDATION OF CARBON MONOXIDE**

(57) An apparatus for selective oxidation of carbon monoxide having a reaction vessel filled with a catalyst which catalyzes the oxidation of carbon monoxide in preference to that of hydrogen in the oxidation of a hydrogen-rich gas in the presence of oxygen, which provides, at a more downstream point along the stream of the hydrogen-rich gas, a larger cross section and a smaller resistance for the passage of a gas, a smaller amount of the air introduced, a larger number of air-supplying pipes and a smaller cooling effect, that is, wherein a casing having a larger diameter in a more downstream point is employed, and at a more downstream point, a catalyst having a carrier of a larger diameter, air-introducing pipes of a smaller diameter, a large number of air-introducing pipes and a smaller number of cooling pipes are disposed. The apparatus can comply with the increase of the amount of the gas that accompanies the introduction of air and to the characteristics of the oxidation of carbon monoxide, and thus can be used for achieving a reduced concentration of carbon monoxide in a hydrogen-rich gas, while maintaining a high concentration of hydrogen in the gas.

**Fig. 2**

**Description**

Technical Field

The present invention relates to an apparatus for selectively oxidizing carbon monoxide, particularly to an apparatus for selective oxidation of carbon monoxide having a reaction vessel filled with a catalyst which catalyzes oxidation of carbon monoxide in preference to hydrogen in a hydrogen-rich gas in the presence of oxygen.

Background Art

As an apparatus for selective oxidation of carbon monoxide, heretofore has been proposed the apparatus in which carbon monoxide in a hydrogen-rich gas, obtained by steam forming a hydrocarbon based fuel, is oxidized by a catalyst such as ruthenium or rhodium for catalyzing oxidation of carbon monoxide in preference to hydrogen in the presence of oxygen (e.g., Japanese Patent Application Laid-Open No. 201702/1993). Here, the catalyst may be contained in an elongated steel tube vessel, and the hydrogen-rich gas is introduced together with air into the reaction vessel along a longitudinal direction. With such a constitution, carbon monoxide in the hydrogen-rich gas is oxidized as the hydrogen-rich gas passes through the reaction vessel.

However, in this apparatus for selective oxidation of carbon monoxide, there is a problem that a concentration of carbon monoxide in the hydrogen-rich gas cannot sufficiently be lowered. This problem occurs because, even when a necessary amount of oxygen for oxidizing carbon monoxide in the hydrogen-rich gas is supplied to the reaction vessel, the concentration of oxygen in the hydrogen-rich gas is high in the vicinity of an inlet of the reaction vessel, an oxidizing reaction of hydrogen is therefore carried out in addition to the oxidizing reaction of carbon monoxide, and oxygen for oxidizing carbon monoxide is consumed.

To deal with this problem, increasing the amount of oxygen introduced has been considered. However, an increase in the amount of oxygen introduced is accompanied by an increase of the amount of hydrogen oxidized, and a problem results in that the hydrogen content of the hydrogen-rich gas is thereby lowered.

To solve these problems, the present applicant has proposed an apparatus for selective oxidation of carbon monoxide for supplying oxygen to the reaction vessel filled with the catalyst from a plurality of positions along a stream of the hydrogen-rich gas (Japanese Patent Application No. 204325/1994). In the apparatus for supplying oxygen from the plurality of positions, the concentration of oxygen in the hydrogen-rich gas is lowered, the oxidizing reaction of hydrogen is inhibited, and the oxidizing reaction of carbon monoxide is performed througout the entire reaction vessel in order to obtain a hydrogen-rich gas with remarkably low carbon monoxide concentration.

Disclosure of the Invention

An apparatus for selective oxidation of carbon monoxide according to the present invention is a further improvement of the apparatus for selective oxidation of carbon monoxide proposed by the present applicant, and an object thereof is to reduce a concentration of carbon monoxide in a hydrogen-rich gas. Moreover, another object of the apparatus for selective oxidation of carbon monoxide according to the present invention is to maintain a high concentration of hydrogen in the hydrogen-rich gas.

To achieve the aforementioned objects, the apparatus for selective oxidation of carbon monoxide according to the present invention is configured as described below.

According to a first aspect of the present invention, there is provided an apparatus for selective oxidation of carbon monoxide having a reaction vessel filled with a catalyst which catalyzes the oxidation of carbon monoxide in a hydrogen-rich gas in preference to hydrogen in the presence of oxygen, the apparatus comprising an oxygen-containing gas supply unit for supplying an oxygen-containing gas to the reaction vessel from a plurality of positions along a stream of the hydrogen-rich gas, wherein the reaction vessel is formed so that the cross sectional area of a gas channel increases toward a downstream side with respect to the stream of the hydrogen-rich gas.

In the first aspect for selective oxidation of carbon monoxide according to the present invention, the oxygen-containing gas supply unit supplies the oxygen-containing gas from the plurality of positions along the stream of the hydrogen-rich gas to the reaction vessel formed such that the cross sectional area of the gas channel increases toward the downstream side with respect to the stream of the hydrogen-rich gas. The reaction vessel is formed such that the cross section of the gas channel increases toward the downstream side with respect to the stream of the hydrogen-rich gas. Therefore, even when an amount of the gas flowing through the reaction vessel increases through the supply of the oxygen-containing gas, an increase in the gas discharge pressure on an outlet side of the reaction vessel and gas stagnation inside the reaction vessel can be prevented, as can reactions, such as a hydrocarbon reaction of carbon monoxide by hydrogen and a carbon monoxide reaction of carbon dioxide. As a result, the oxidizing reaction of carbon monoxide can be smoothly carried out.

In this first aspect for selective oxidation of carbon monoxide according to the present invention, the reaction vessel comprises a casing whose cross sectional area increases toward the downstream side with respect to the stream of the hydrogen-rich gas.

Moreover, in the first aspect for selective oxidation of carbon monoxide according to the present invention, the reaction vessel can be constituted by employing a monolithic carrier whose cell number decreases toward the downstream side with respect to the stream of the hydrogen-rich gas to carry the catalyst. In this case as well, the reaction vessel can be formed such that the cross sectional area of the gas channel increases toward the downstream side with respect to the stream of the hydrogen-rich gas. Additionally, the reaction vessel can be filled with the catalyst in such a manner that a gas channel resistance in a filled catalyst phase decreases toward the downstream side with respect to the stream of the hydrogen-rich gas. Additionally, the "monolithic carrier" may be a carrier constituted of a plurality of cells as a plurality of divided gas channels, and may correspond, for example, to a honeycomb tube or the like.

Furthermore, in the first aspect for selective oxidation of carbon monoxide according to the present invention, the oxygen-containing gas supply unit supplies the oxygen-containing gas such that the amount of oxygen supplied to the reaction vessel decreases toward the downstream side with respect to the stream of the hydrogen-rich gas in the reaction vessel. Alternatively, the oxygen-containing gas may be supplied by a piping which has a smaller cross sectional area channel on the downstream side with respect to the stream of the hydrogen-rich gas in the reaction vessel. Because the concentration of carbon monoxide in the hydrogen-rich gas is higher upstream with respect to the stream of the hydrogen-rich gas in the reaction vessel, the oxidizing reaction of carbon monoxide occurs more frequently. Therefore, when a smaller amount of oxygen-containing gas is supplied or when the oxygen-containing gas is supplied through piping having a smaller cross section on the downstream side, the amount of oxygen supplied to the oxidizing reaction of carbon monoxide is more appropriate. In these modes of the first apparatus for selective oxidation of carbon monoxide according to the present invention, the oxygen-containing gas supply unit may also be constituted such that a larger number of pipes are disposed on the downstream side with respect to the stream of the hydrogen-rich gas in the reaction vessel in order to supply the oxygen-containing gas. In this case, since the oxygen-containing gas is rapidly diffused and mixed into the hydrogen-rich gas, and carbon monoxide can be more efficiently oxidized.

Additionally, the first apparatus for selective oxidation of carbon monoxide according to the present invention may comprise a cooling apparatus for cooling the reaction vessel so that a cooling effect to the reaction vessel decreases downstream with respect to the stream of the hydrogen-rich gas in the reaction vessel. As described above, because the oxidizing reaction of carbon monoxide occurs more frequently on the upstream side with respect to the stream of the hydrogen-rich gas in the reaction vessel, heat is easily generated such that a higher temperature is created on the upstream side. Therefore, when the reaction vessel is cooled in order to produce a smaller cooling effect on the downstream side, the temperature of the reaction vessel as a whole can be maintained at a more uniform proper temperature. In this mode of the first aspect of the present invention, the cooling apparatus may be constituted such that a cooling medium is circulated in the reaction vessel through a channel having a smaller contact area on the downstream side with respect to the stream of the hydrogen-rich gas in the reaction vessel, or the cooling medium may be circulated in the reaction vessel through a smaller number of channels on the downstream side. The reaction vessel can thereby be configured with a larger gas channel section on the downstream side.

According to another aspect of the present invention, there is provided an apparatus for selective oxidation of carbon monoxide having a reaction vessel filled with a catalyst which catalyzes oxidation of carbon monoxide in a hydrogen-rich gas in preference to hydrogen in the presence of oxygen, the apparatus comprising an oxygen-containing gas supply unit for supplying an oxygen-containing gas to the reaction vessel from a plurality of positions along a stream of the hydrogen-rich gas, wherein the reaction vessel is filled with the catalyst so that a gas channel resistance in a filled catalyst phase decreases toward a downstream side with respect to the stream of the hydrogen-rich gas.

In the apparatus according to the second aspect, the oxygen-containing gas supply unit supplies the oxygen-containing gas from the plurality of positions along the stream of the hydrogen-rich gas to the reaction vessel filled with the catalyst so that the gas channel resistance in the filled catalyst phase decreases toward the downstream side with respect to the stream of the hydrogen-rich gas. The reaction vessel is filled with the catalyst so that the gas channel resistance in the filled catalyst phase decreases toward the downstream side with respect to the stream of the hydrogen-rich gas. Therefore, even when the gas amount flowing through the reaction vessel increases midway as a result of the supply of the oxygen-containing gas, increase of the gas discharge pressure on the outlet side of the reaction vessel can be prevented, gas stagnation inside the reaction vessel can be eliminated, and reactions such as the hydrocarbon reaction of carbon monoxide by hydrogen and the carbon monoxide reaction of carbon dioxide can be prevented. As a result, the oxidizing reaction of carbon monoxide can be smoothly carried out.

In this second aspect of the present invention, the reaction vessel comprises a plurality of filled portions filled with the catalyst so that the gas channel resistance in the catalyst phase differs.

Moreover, in this second aspect of the present invention, the reaction vessel can be constituted by allowing the monolithic carrier whose cell number decreases toward the downstream side with respect to the stream of the hydrogen-rich gas to carry the catalyst. In this case, the reaction vessel can be formed such that the gas channel section increases toward the downstream side with respect to the stream of the hydrogen-rich gas. Additionally, the reaction vessel can be filled with the catalyst so that the gas channel resistance in the filled catalyst phase decreases toward the downstream side.

Furthermore, in the apparatus for selective oxidation of carbon monoxide according to the second aspect of the present invention, the oxygen-containing gas supply unit may supply the oxygen-containing gas in such a manner that the amount of oxygen supplied to the reaction vessel decreases toward the downstream side with respect to the stream of the hydrogen-rich gas in the reaction vessel. Alternatively, the oxygen-containing gas may also be supplied by piping having a smaller cross sectional area on the downstream side with respect to the stream of the hydrogen-rich gas in the reaction vessel. Because the concentration of carbon monoxide in the hydrogen-rich gas is higher on the upstream side with respect to the stream of the hydrogen-rich gas in the reaction vessel, oxidizing reactions of carbon monoxide occur more frequently. Therefore, when a smaller amount of oxygen-containing gas is supplied or the oxygen-containing gas is supplied by piping narrower on the downstream side, a more appropriate amount of oxygen can be supplied to the oxidizing reaction of carbon monoxide. In these modes of the aforementioned second aspect of the present invention, the oxygen-containing gas supply unit may also be constituted such that a larger number of pipes are disposed on the downstream side with respect the stream of the hydrogen-rich gas in the reaction vessel in order to supply the oxygen-containing gas. With such a configuration, because the oxygen-containing gas is rapidly diffused, or mixed into, the hydrogen-rich gas, carbon monoxide can be efficiently oxidized.

Additionally, the apparatus for selective oxidation of carbon monoxide according to the second aspect of the present invention may comprise a cooling apparatus for cooling the reaction vessel in which the cooling effect to the reaction vessel decreases toward the downstream side with respect to the stream of the hydrogen-rich gas in the reaction vessel. As described above, because the oxidizing reaction of carbon monoxide occurs more frequently on the upstream side with respect to the stream of the hydrogen-rich gas in the reaction vessel, more heat is generated on the upstream side. Therefore, when the reaction vessel is cooled in order to produce a smaller cooling effect on the downstream side, the temperature of the whole reaction vessel can be more uniform maintained at the proper temperature. In this mode of the apparatus according to the present invention, the cooling apparatus may also be constituted such that the cooling medium is circulated in the reaction vessel through channel with a smaller contact area on the downstream side with respect to the stream of the hydrogen-rich gas in the reaction vessel, or the cooling medium may be circulated in the reaction vessel through a smaller number of channels on the downstream side. In this manner, the reaction vessel can be made to have a larger cross sectional area on the downstream side.

Brief Description of the Drawings

FIG. 1 is a diagram schematically showing the constitution of a reformer 20 including a CO selective oxidation apparatus 30 according to one embodiment of the present invention;
FIG. 2 is a sectional schematic of the CO selective oxidation apparatus 30 of the embodiment of the present invention;
FIG. 3 is a sectional view showing a section taken along line A-A of the CO selective oxidation apparatus 30 of the apparatus shown in FIG. 2;
FIG. 4 is a sectional schematic of a CO selective oxidation apparatus 130 of an example modification of the present invention; and
FIG. 5 is a view showing a section of a honeycomb tube as one example of a monolithic carrier.

Best Mode for Carrying out the Invention

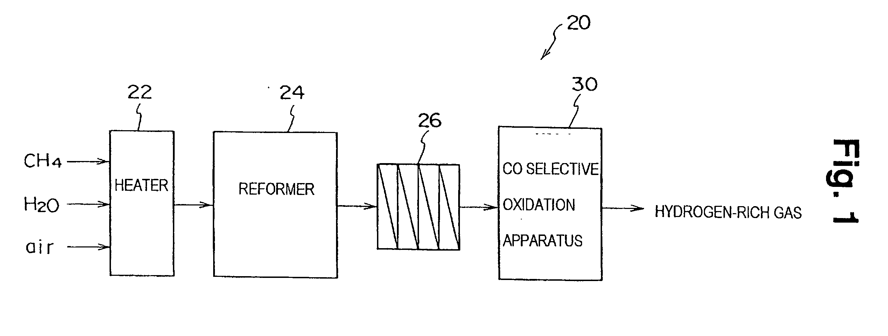

The best mode for carrying out the present invention will next be described by way of an illustrative embodiment. FIG. 1 is a diagram schematically showing a constitution of a reformer 20 including a CO selective oxidation apparatus 30 according to one embodiment of the present invention. The reformer 20 is an apparatus for steam reforming of a hydrocarbon-based fuel and obtaining a hydrogen-rich gas to be supplied to a hydrogen consuming engine having a low allowable concentration of carbon monoxide, such as a solid polymeric fuel cell. The apparatus comprises a heater 22 for heating a mixture gas of a hydrocarbon based fuel (e.g., methane or the like) and an oxygen-containing gas (e. g., air or the like) containing water vapor and oxygen; a reforming portion 24 for reforming the heated mixture gas by a reaction of the following equations (1) to (3) to obtain the hydrogen-rich gas; a heat exchanger 26 for cooling the reformed/obtained hydrogen-rich gas; and the CO selective oxidation apparatus 30 for oxidizing carbon monoxide as a byproduct contained in the cooled hydrogen-rich gas in preference to hydrogen. A reforming reaction in the reformer 24 is efficiently performed in a range of about 600°C to 800°C, a selective oxidizing reaction in the CO selective oxidation apparatus 30 is efficiently performed in a range of about 140°C to 170°C, and the hydrogen-rich gas is cooled by the heat exchanger 26. Therefore, in the present embodiment, the CO selective oxidation apparatus 30 is constituted to oxidize carbon monoxide in the hydrogen-rich gas obtained by the reforming reaction of the reformer 24.

$$CH_4 + (1/2)O_2 \rightarrow 2H_2 + CO + 35.7kJ \qquad (1)$$

$$CH_4 + H_2O \rightarrow 3H_2 + CO - 206.2kJ \qquad (2)$$

$$CO + H_2O \rightarrow H_2 + CO_2 + 41.2kJ \qquad (3)$$

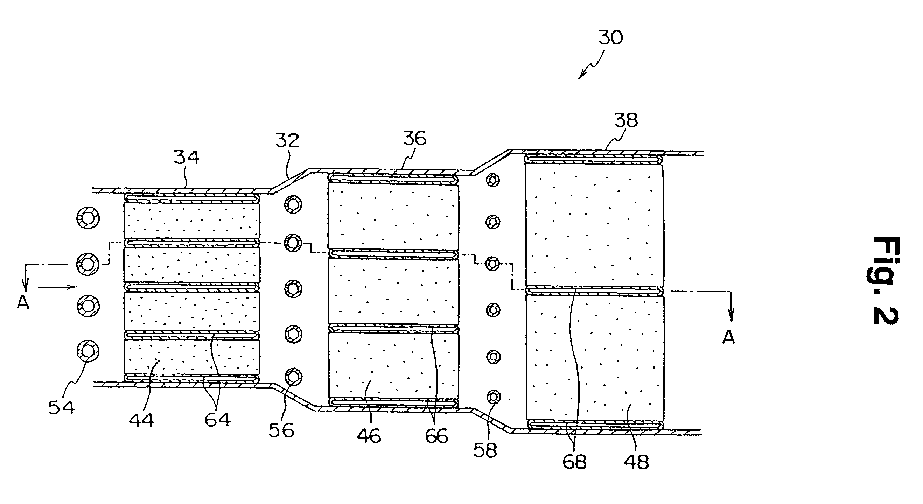

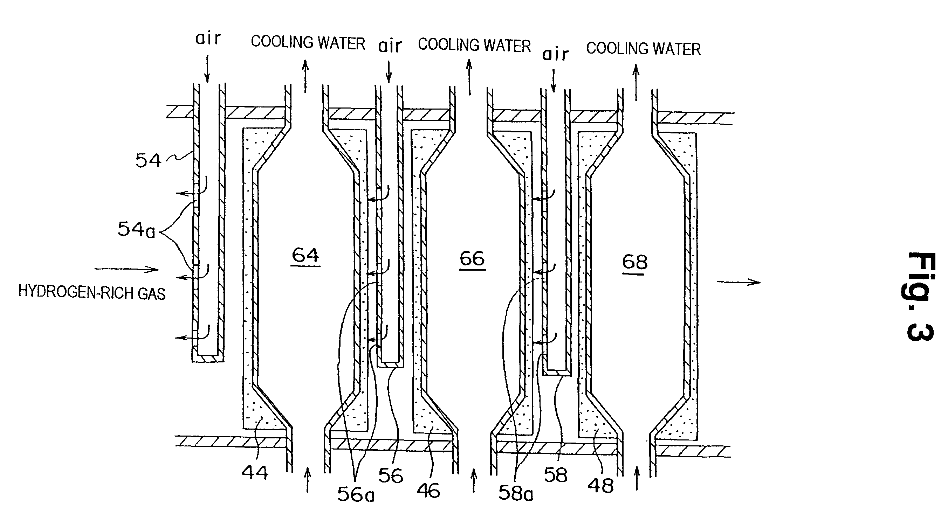

FIG. 2 is a sectional schematic showing the constitution of the CO selective oxidation apparatus 30 of the present embodiment, and FIG. 3 is a view showing a section along line A-A of the CO selective oxidation apparatus 30 of the apparatus of FIG. 2. As shown in the drawing, the CO selective oxidation apparatus 30 of the present embodiment comprises a casing 32 forming an outer wall of the CO selective oxidation apparatus 30; catalyst filled portions 44 to 48 filled with a catalyst which catalyzes oxidation of carbon monoxide in preference to hydrogen in the hydrogen-rich gas in the presence of oxygen; air-introducing pipes 54 to 58 for introducing air as an oxygen-containing gas into the hydrogen-rich gas; and cooling-water passages 64 to 68 for passing a cooling medium to cool the catalyst filled portions 44 to 48.

In the casing 32, catalyst disposing portions 34 to 38 are formed in which a gas channel sectional area is enlarged in three stages along a stream of the hydrogen-rich gas from an upstream side, and a plurality of catalyst filled portions 44 to 48 are disposed for the respective catalyst disposing portions 34 to 38. The catalyst filled portions 44 to 48 are filled with a carrier carrying the catalyst (e.g., ruthenium or rhodium) which catalyzes oxidation of carbon monoxide in preference to hydrogen in the hydrogen-rich gas in the presence of oxygen so that the catalyst filled portion on the upstream side has a higher density. That is, the catalyst filled portion 44 is filled with the catalyst carried by the carrier having a small particle diameter, and the catalyst filled portion 48 is filled with the catalyst carried by the carrier having a particle diameter larger than that of the carrier with which the catalyst filled portion 44 is filled. The catalyst filled portion 46 is filled with the catalyst carried by the carrier having a particle diameter larger than that of the carrier with which fills the catalyst filled portion 44, and smaller than that of the carrier with which fills the catalyst filled portion 48. Therefore, in the catalyst filled portions 44 to 48, the gas channel cross sectional area increases and gas channel resistance decreases toward the downstream side.

The air-introducing pipes 54 to 58 are disposed to cross at right angles to upstream middle portions of the respective catalyst disposing portions 34 to 38 of the casing 32 with respect to the stream of the hydrogen-rich gas. The air-introducing pipes 54 to 58 have a smaller air channel cross sectional area on the downstream side along the stream of the hydrogen-rich gas, and the amount of air supply decreases toward the downstream side. In the respective air-introducing pipes 54 to 58, as shown in FIG. 3, a plurality of air supply holes 54a to 58a are formed on the upstream side of the hydrogen-rich gas, so that air is introduced into the hydrogen-rich gas.

As shown in FIGS. 2 and 3, the cooling-water passages 64 to 68 are formed as flat channels which have enlarged widths and which cross at right angles to the stream of the hydrogen-rich gas, and are disposed to be laminated on the respective catalyst filled portions 44 to 48. The respective cooling-water passages 64 to 68 have the same shape, and are disposed so that the number of disposed pipes decreases toward the downstream side along the stream of the hydrogen-rich gas. Therefore, the cross sectional area of the cooling water channel and the cooling effect decrease toward the downstream side.

The CO selective oxidation apparatus 30 of the apparatus constituted as described above is constituted to have a larger gas channel sectional area, a smaller gas channel resistance, a smaller amount of introduced air, a larger number of introduced air-supplying pipes, and a smaller cooling effect toward the downstream side along the stream of the hydrogen-rich gas. Therefore, even when air is introduced to increase a gas flow rate, gas can flow without stagnating, and a discharge pressure of the hydrogen-rich gas in an outlet of the CO selective oxidation apparatus 30 can be prevented from increasing. As a result, reactions adverse or reverse to reforming reactions, such as a hydrocarbon reaction of carbon monoxide by hydrogen and a carbon monoxide reaction of carbon dioxide, can be prevented. Additionally, an oxidizing reaction of carbon monoxide is smoothly carried out and a concentration of carbon monoxide in the hydrogen-rich gas can be remarkably lowered. Moreover, as the oxidizing reaction of carbon monoxide progresses, a corresponding amount of air is introduced via the air-introducing pipes 54 to 58, and therefore the oxidizing reaction of carbon monoxide can be performed in preference to that of hydrogen. Additionally, because a larger number of air-introducing pipes are disposed to facilitate the mixing of the hydrogen-rich gas with air on the downstream side, carbon monoxide can be efficiently oxidized. As a result, the hydrogen content of the hydrogen-rich gas can be increased. Furthermore, because the respective catalyst filled portions 44 to 48 are cooled in accordance with the progress of oxidizing reaction of carbon monoxide, the entire CO selective oxidation apparatus 30 can be set at a temperature suitable for the oxidizing reaction of carbon monoxide. As a result, the oxidizing reaction of carbon monoxide can be smoothly performed, and the concentration of carbon monoxide in the hydrogen-rich gas can be further lowered.

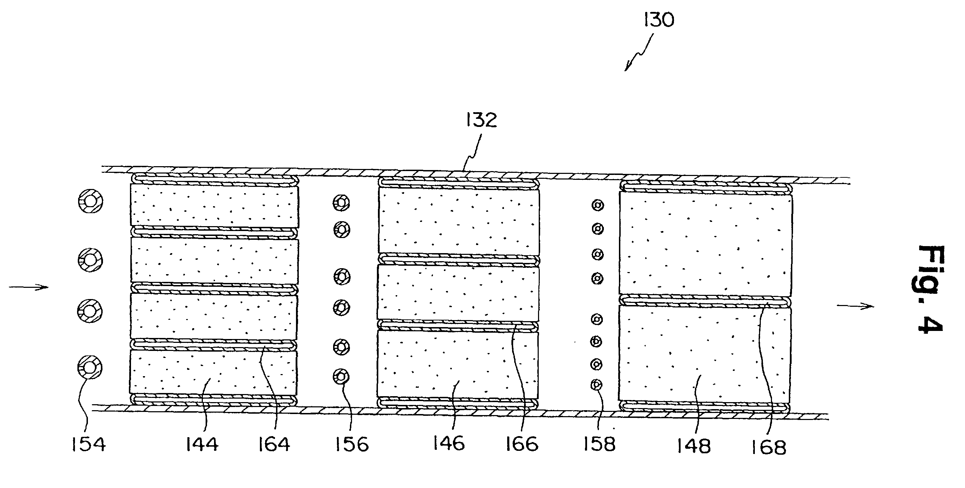

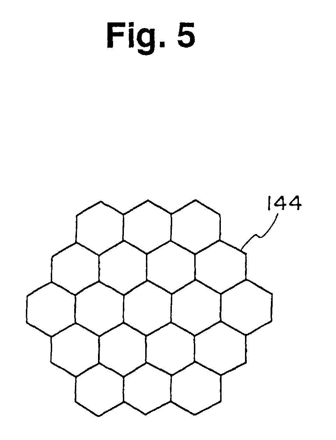

The cross sectional area of the casing 32 of the reformer 20 described above is enlarged in three stages along the stream of the hydrogen-rich gas, but the cross section may also remain constant along the stream of the hydrogen-rich gas. FIG. 4 schematically shows the constitution of a modified example CO selective oxidation apparatus 130. In the figure and in the following description, components corresponding to those of the CO selective oxidation apparatus 30 of the embodiment are denoted by using corresponding reference numbers formed by adding 100 to the numbers used to describe the apparatus 30. As shown in FIG. 4, the casing 132 of the CO selective oxidation apparatus 130 of the modification example has a constant cross sectional area with respect to the stream of the hydrogen-rich gas. However, the particle diameter of the carrier of the catalyst with which catalyst filled portions 144 to 148 are filled is adjusted. Therefore, the CO selective oxidation apparatus 130 of the modification example can also be constituted to have a larger gas channel cross sectional area, a smaller gas channel resistance, a smaller amount of introduced air, a larger number of introduced air-supplying pipes, and a smaller cooling effect toward the downstream side along the stream of the hydrogen-rich gas. For example, the catalyst carried by a monolithic carrier having a plurality of divided channels (e.g., a honeycomb tube shown in FIG. 5) is disposed in the catalyst filled portions 144 to 148, and a monolithic carrier having a smaller number of cells is used on the downstream side. Then, the gas channel area increases and gas channel resistance decreases toward the downstream side. Therefore, the CO selective oxidation apparatus 130 of the modification example is able to produce effects similar to the effects of the CO selective oxidation apparatus 30 of the preferred embodiment. Additionally, a casing having a constant cross sectional area, such as the casing 132, may facilitate configuration or installation of the CO selective oxidation apparatus 130.

Both the CO selective oxidation apparatus 30 and the CO selective oxidation apparatus 130 may be constituted to have a larger gas channel sectional area, a smaller gas channel resistance, a smaller amount of introduced air, a larger number of introduced air-supplying pipes, and a smaller cooling effect toward the downstream side along the stream of the hydrogen-rich gas. However, the present invention does not require the disposition of all of the above elements, and some of the elements may be eliminated where the effect of their elimination is not overly detrimental. Examples of such constitution include a constitution in which only an element having a larger gas channel sectional area, a smaller gas channel resistance, a smaller amount of introduced air, a larger number of introduced air-supplying pipes, or a smaller cooling effect toward the downstream side along the stream of the hydrogen-rich gas is removed and a constitution in which a combination of two or more elements is removed.

In both the CO selective oxidation apparatus 30 or the CO selective oxidation apparatus 130 described above, the selective oxidation of carbon monoxide in a reformed gas obtained by steam reforming of a hydrocarbon based fuel was described. An apparatus for oxidizing carbon monoxide in the hydrogen-rich gas in preference to hydrogen in the presence of oxygen may be applied to any hydrogen-rich gas. Therefore, while the CO selective oxidation apparatus 30 and the CO selective oxidation apparatus 130 were both described as a part of a reformer 20, but may be a part of an apparatus which does not include another constitution of the reformer 20, and need not be a part of the reformer 20.

For the CO selective oxidation apparatuses 30 or 130, the selective oxidation of carbon monoxide in the hydrogen-rich gas to be supplied to a hydrogen consuming engine having a low allowable concentration of carbon monoxide, such as a solid polymeric fuel cell was described. However, carbon monoxide in the hydrogen-rich gas to be supplied to any hydrogen consuming engine may also be selectively oxidized.

While the preferred embodiment of the present invention was described above, the present invention is not limited to the embodiment, and can variously be carried out in a range which does not depart from the scope of the present invention.

**Claims**

1. An apparatus for selective oxidation of carbon monoxide having a reaction vessel filled with a catalyst which catalyzes oxidation of carbon monoxide in a hydrogen-rich gas in preference to hydrogen in the presence of oxygen, said apparatus comprising:

   an oxygen-containing gas supply unit for supplying an oxygen-containing gas to said reaction vessel from a plurality of positions along a stream of said hydrogen-rich gas,
   wherein said reaction vessel is formed so that the cross sectional area of a gas channel increases toward a downstream side with respect to the stream of said hydrogen-rich gas.

2. The apparatus for selective oxidation of carbon monoxide according to claim 1 wherein said oxygen-containing gas supply unit comprises a casing formed such that a cross sectional area increases toward the downstream side with respect to the stream of said hydrogen-rich gas.

3. The apparatus for selective oxidation of carbon monoxide according to claim 1 wherein said reaction vessel is constituted by employing a monolithic carrier whose cell number decreases toward the downstream side with respect to the stream of said hydrogen-rich gas for carrying said catalyst.

4. The apparatus for selective oxidation of carbon monoxide according to claim 1 wherein said oxygen-containing gas supply unit supplies said oxygen-containing gas such that the amount of oxygen supplied to the reaction vessel decreases toward the downstream side with respect to the stream of said hydrogen-rich gas in said reaction vessel.

5. The apparatus for selective oxidation of carbon monoxide according to claim 4 wherein the number of conduits of said oxygen-containing gas supply unit supplies said oxygen-containing gas increases toward the downstream side with respect to the stream of said hydrogen-rich gas in said reaction vessel.

6. The apparatus for selective oxidation of carbon monoxide according to claim 1 wherein said oxygen-containing gas supply unit supplies said oxygen-containing gas through piping which has a smaller cross sectional area on the downstream side with respect to the stream of said hydrogen-rich gas in said reaction vessel.

7. The apparatus for selective oxidation of carbon monoxide according to claim 6 wherein the number of conduits of said oxygen-containing gas supply unit supplies said oxygen-containing gas increases toward the downstream side with respect to the stream of said hydrogen-rich gas in said reaction vessel.

8. The apparatus for selective oxidation of carbon monoxide according to claim 1, further comprising a cooling apparatus for cooling the reaction vessel such that the cooling effect decreases toward the downstream side with respect to the stream of said hydrogen-rich gas in said reaction vessel.

9. The apparatus for selective oxidation of carbon monoxide according to claim 8 wherein said cooling apparatus circulates a cooling medium in the reaction vessel through a channel having a smaller contact area on the downstream side with respect to the stream of said hydrogen-rich gas in said reaction vessel.

10. The apparatus for selective oxidation of carbon monoxide according to claim 8 wherein the number of channels through which said cooling apparatus circulates a cooling medium in the reaction vessel decreases toward the downstream side with respect to the stream of said hydrogen-rich gas in said reaction vessel.

11. An apparatus for selective oxidation of carbon monoxide having a reaction vessel filled with a catalyst which catalyzes oxidation of carbon monoxide in a hydrogen-rich gas in preference to hydrogen in the presence of oxygen, said apparatus comprising:

an oxygen-containing gas supply unit for supplying an oxygen-containing gas to said reaction vessel from a plurality of positions along a stream of said hydrogen-rich gas,
wherein said reaction vessel is filled with the catalyst such that the gas channel resistance in a filled catalyst phase decreases toward a downstream side with respect to the stream of said hydrogen-rich gas.

12. The apparatus for selective oxidation of carbon monoxide according to claim 11 wherein said reaction vessel comprises a plurality of filled portions filled with said catalyst such that gas channel resistance in the catalyst phase has a plurality of values.

13. The apparatus for selective oxidation of carbon monoxide according to claim 12 wherein said reaction vessel is constituted by employing a monolithic carrier whose cell number decreases toward the downstream side with respect to the stream of said hydrogen-rich gas to carry said catalyst.

14. The apparatus for selective oxidation of carbon monoxide according to claim 11 wherein said oxygen-containing gas supply unit supplies said oxygen-containing gas such that the amount of oxygen supplied to the reaction vessel decreases toward the downstream side with respect to the stream of said hydrogen-rich gas in said reaction vessel.

15. The apparatus for selective oxidation of carbon monoxide according to claim 14 wherein the number of conduits of said oxygen-containing gas supply unit supplies said oxygen-containing gas increases toward the downstream side with respect to the stream of said hydrogen-rich gas in said reaction vessel.

16. The apparatus for selective oxidation of carbon monoxide according to claim 11 wherein said oxygen-containing gas supply unit supplies said oxygen-containing gas through piping which has a smaller cross sectional area on the downstream side with respect to the stream of said hydrogen-rich gas in said reaction vessel.

17. The apparatus for selective oxidation of carbon monoxide according to claim 16 wherein the number of conduits of said oxygen-containing gas supply unit supplies said oxygen-containing gas increases toward the downstream side with respect to the stream of said hydrogen-rich gas in said reaction vessel.

18. The apparatus for selective oxidation of carbon monoxide according to claim 11, further comprising a cooling apparatus for cooling the reaction vessel such that the cooling effect decreases toward the downstream side with respect to the stream of said hydrogen-rich gas in said reaction vessel.

19. The apparatus for selective oxidation of carbon monoxide according to claim 18 wherein said cooling apparatus circulates a cooling medium in the reaction vessel through a channel having a smaller contact area on the downstream side with respect to the stream of said hydrogen-rich gas in said reaction vessel.

20. The apparatus for selective oxidation of carbon monoxide according to claim 18 wherein the number of channels through which said cooling apparatus circulates a cooling medium in the reaction vessel decreases toward the downstream side with respect to the stream of said hydrogen-rich gas in said reaction vessel.

# Fig. 1

CH₄ →
H₂O →
air →

| 22 HEATER | → | 24 REFORMER | → | 26 | → | 30 CO SELECTIVE OXIDATION APPARATUS | → HYDROGEN-RICH GAS |

20

# Fig. 2

# Fig. 3

# Fig. 4

# Fig. 5

144

## INTERNATIONAL SEARCH REPORT

| International application No. |
| --- |
| PCT/JP00/02419 |

| A. CLASSIFICATION OF SUBJECT MATTER |
| --- |
| Int.Cl$^7$  C01B3/38, C10K3/04, H01M8/06 |
| According to International Patent Classification (IPC) or to both national classification and IPC |

| B. FIELDS SEARCHED |
| --- |
| Minimum documentation searched (classification system followed by classification symbols) |
| Int.Cl$^7$  C01B3/38, C10K3/04, H01M8/06 |

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)
    WPI/L

| C. DOCUMENTS CONSIDERED TO BE RELEVANT | | |
| --- | --- | --- |
| Category* | Citation of document, with indication, where appropriate, of the relevant passages | Relevant to claim No. |
| PA | EP, 968958, A (NGK INSULATORS,LTD.), 05 January, 2000 (05.01.00) & JP, 2000-7304, A  & JP, 2000-7302, A & JP, 2000-7303, A | 1-20 |
| A | JP, 8-47621, A (Toyota Motor Corporation), 20 February, 1996 (20.02.96)  (Family: none) | 1-20 |
| A | JP, 8-34601, A (Idemitsu Kosan Co., Ltd.), 06 February, 1996 (06.02.96)  (Family: none) | 1-20 |
| A | JP, 7-185303, A (Kabushiki Kaisha Equos Research, et al.), 25 July, 1995 (25.07.95)  (Family: none) | 1-20 |

| ☐ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 July, 2000 (05.07.00) | 18 July, 2000 (18.07.00) |

| Name and mailing address of the ISA/ | Authorized officer |
| --- | --- |
| Japanese Patent Office | |
| Facsimile No. | Telephone No. |

Form PCT/ISA/210 (second sheet) (July 1992)